# EUROPEAN PATENT APPLICATION

(11) **EP 2 821 721 A1**
(43) Date of publication of application: **07.01.2015**
(21) Application number: 14175866.4
(22) Date of filing: 04.07.2014
(51) Int. Cl.: F24F 3/044, B01D 45/08, B01D 46/20, B01D 53/14, F24C 15/20, F24F 3/16, F24F 7/08, A61L 9/015, A61L 9/20, F24F 3/00

(54) **A forced-airing system with air extraction/reintegration for serving working premises, e.g. as kitchen and workshops, without flue for emission into the atmosphere**

(30) Priority: 04.07.2013 IT RM20130394
(71) Applicant: Armenise, Giustiniano, 70123 Bari (IT)
(72) Inventor: Armenise, Giustiniano, 70123 Bari (IT)
(74) Representative: Fezzardi, Antonio

(57) **Abstract**

A forced-airing system with air extraction/reintegration for serving working premises comprises, in combination: means for extracting air from the premises to be aired; means for treating the air extracted from the premises; means for direct emission into the atmosphere of all or part of the air treated without the use of flues; means for introducing external air; as well as means for treating the air coming from outside prior to introduction thereof into the premises to be aired.

## Description

The present invention relates to air treatment, with particular reference to working premises where foodstuff products are prepared.

By way of non-limiting example, the invention can find application in providing a system alternative to flues for a forced-airing system with air extraction/reintegration for serving the kitchen and workroom premises in compliance with the norm UNI 10339 and the regulation (CE) 852/04.

The present invention proposes a valid alternative to the use of flues, which are the only technical solution, which is currently envisaged and accepted by the bodies responsible for control, for emission of fumes into the atmosphere.

So far, in order to be able to start an activity of preparation and cooking of foodstuffs (e.g., kitchens for serving restaurants and reception halls; workrooms for prepared food, confectionery products, bread-making, catering, etc.) it is necessary to provide a flue to enable emission of fumes into the atmosphere in compliance with current standards (UNI 7129 and further modifications).

The aforesaid flues are installed along the outer walls of buildings, and have to reach the roof level, exceeding by at least 0.50 m the parapet, and in any case exceeding the roof of higher adjacent structures that are at a distance of less than 5 m from the flues themselves. The walls involved in the passage of the flue can be exclusively the ones facing inwards onto the internal courtyard and not the main ones facing the street. Consequently, if a working premises for this type of activity at street level were not to have walls facing inwards, it becomes impossible to carry out the activity. Moreover, in order to install the aforesaid flues it is necessary to have a condominium permit in addition to respecting a series of horizontal distances from doors and windows, piping, other installations and systems, ventilation openings, etc., these being requirements that cannot always be met.

Consequently, the main purpose of the present invention is to provide a completely innovative airing system that avoids the need to have a flue.

The invention is substantially based upon two basic concepts:
- the well-being of workers and hence the environmental conditions where they work; and
- respect of the external environment.

This has been obtained, according to the invention, by providing a forced-airing system comprising, in combination: means for extracting air from the premises to be aired; means for treating the extracted air; means for direct emission into the atmosphere of all or part of the air treated without the use of flues; means for introducing external air; and means for treating air coming from outside prior to introduction thereof into the premises to be aired.

A better understanding of the invention will be obtained from the ensuing description and with reference to the attached figures, which regard a non-limiting example of embodiment that meets the requirements of health bodies, such as SISP (servizi di igiene e sanità pubblica - hygiene and public health services), SIAN (servizi di igiene alimenti e nutrizione - food hygiene and nutrition services), and SPESAL (servizi di protezione e sicurezza ambienti di lavoro - workplace safety and prevention services).

In the drawings:
Figure 1 is a layout regarding an example of practical implementation of a system according to the invention in the case of a confectionery premises with workroom and retail area; and

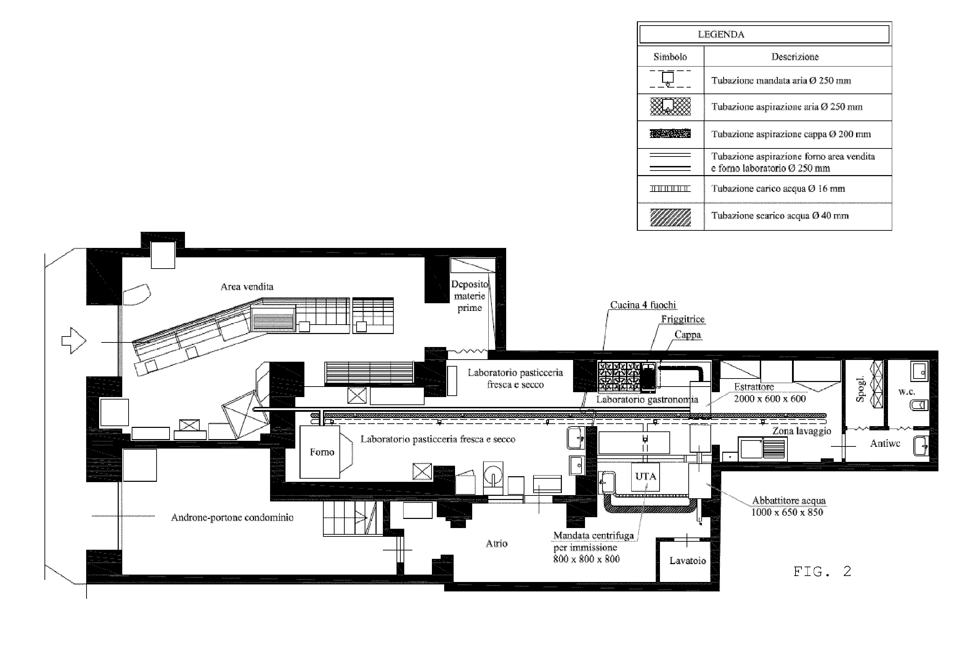

Figure 2 is an operating scheme of the invention, which shows the air/water system (not in scale).

The problems of the internal airing of cooking premises have assumed in the last few years the attention of persons responsible for hygiene, health, and safety in such systems.

It is important to "manage" appropriately the environmental microclimate of the aforesaid working premises as regards different aspects, the most important of which can be considered hygiene, safety, and well-being of workers in the premises themselves.

The cooking premises "Kitchen", when the hobs and fume hoods are turned off, are to be understood as working premises "Workroom" for the preparation of foodstuffs ready for being cooked. In this case, the flow rates of air introduced and extracted are to be calculated according to the number of the people carrying out the work in compliance with the norm UNI 10339, whereas when all the equipment is functioning the reintegration air is calculated as a function of the air extracted.

Well-being is a factor of primary importance for the staff working in cooking premises, who may find themselves forced to work in conditions of extreme discomfort as a result of the propagation of excessive heat and the presence of unpleasant odours and condensate.

It should be noted that provision of a simple air-extraction system obtained by creating suction pressure in a room would mean taking in air from the adjacent working premises and from outside. This air could be contaminated, and consequently, according to the invention, all the air extracted is to be appropriately integrated with air introduced that has been adequately filtered and treated both in the winter season and in the summer season.

In the case in point, it is preferable for working premises where food is prepared to be kept in conditions of slight overpressure with respect to the contiguous areas so as to eliminate the possibility of contamination of the premises reserved for preparation of foodstuffs and proliferation of bacteria therein. Likewise, the cooking premises should be kept in conditions of slight negative pressure with respect to the contiguous areas so as to eliminate the possibility of contamination by the cooking vapours.

For the purposes of energy saving, it is expedient to reduce the need for fresh air coming from outside, which has to be treated thermally. For this purpose, according to the invention, fume hoods are provided with cold reintegration, where approximately 50% of the external air is introduced directly into the fume hoods and the remaining part - appropriately treated - is introduced directly into the premises.

### TECHNICAL DATA OF THE SYSTEM USED IN THE TESTS

The working premises "Workroom" comprises:
a workroom for fresh and dry confectionery products, with a surface of 25 m² and a volume of 90 m³;
   · a workroom for prepared foods, salty cakes, and savoury bread, with a surface of 10 m² and a volume of 35 m³;
   · a washing area, with a surface of 10 m² and a volume of 35 m³;
for a total surface of 45.00 m² and volume of 160 m³.

It should be noted that the equipment present is constituted by cooking ranges, ovens, Grillvapors, and fryers, which are not supplied either with coal or wood. Consequently, the cooking vapours captured by the corresponding hoods are to be considered non-contaminating.

### DESCRIPTION OF SYSTEM

### a) Air-intake system

The system for renewal and introduction of air into the environment is made up of an Air Treatment Unit (ATU), which takes in all the air directly from outside, filters it, and, via a ducting and corresponding mouths, introduces it into the premises, practically at a neutral temperature, i.e., 20°C during the winter season and 26°C during the summer season. This unit does not have the purpose of conditioning the environment but only that of guaranteeing the minimum intake of external air as specified by current standards.

It should be noted that the ATU is able to humidify, filter, and heat/cool irrespective of possible purposely provided air-conditioning systems, which in this case would be superfluous.

Introduction of air into the environment occurs through terminal units calculated for obtaining low final rates of the air in order to prevent draughts that are disagreeable for operators working in the premises.

The rate of the air in the areas occupied by people, from the floor level up to a height of 2 m, are in conformance with Appendix X of the norm UNI 10339, i.e., on average from 0.15 to 0.40 m/s.

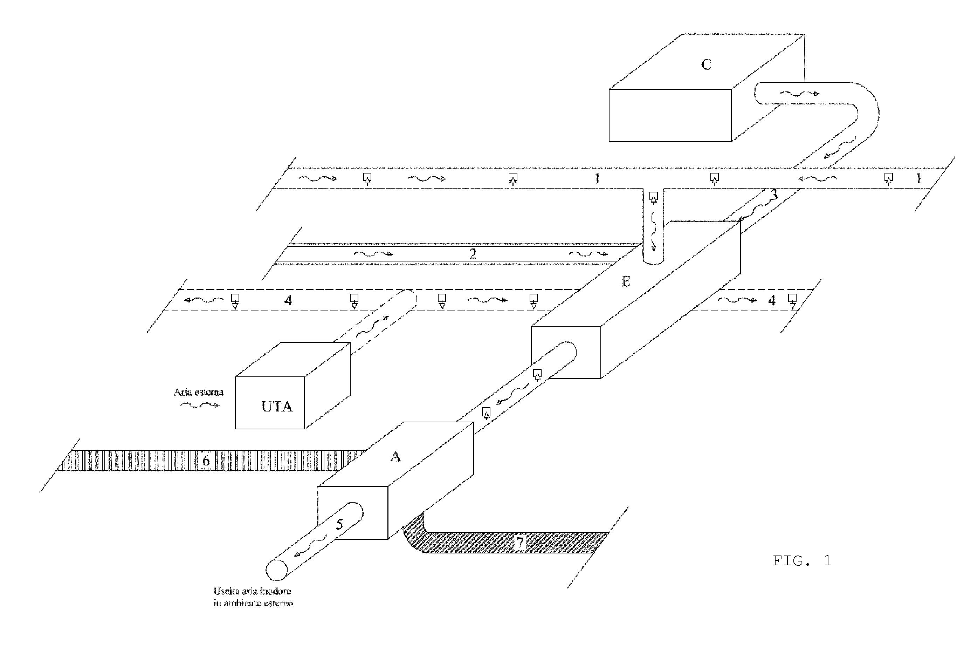

The above air-intake system, which takes in the air directly from outside, filters it (and possibly dehumidifies it and/or heats/cools it) and, via a ducting preferably of an AISI 304 F 250 type (represented dashed in Figure 1), introduces it directly into the premises, is equipped with purposely provided diffusion mouths sized as a function of the pressure head and of the flow rate, controlling the rate, as mentioned previously:
- 8 mouths measuring 30 x 20 (400 m³/h), which ensure an air change of 3.200 m³/h corresponding to approximately 20 air changes per hour.

### b) Air-extraction system

The cooking vapours and fumes captured by the corresponding hoods, which, as has already been said, are considered non-contaminating, are treated via:
- an air extractor complete with odour-abatement apparatus provided with active-carbon filters and absolute bag filter, which, in addition to filtering the air, de-odourizes it; and
- a water abatement apparatus for further treatment thereof and subsequent discharge into the sewer.

According to a peculiar characteristic of the present invention, the air treated by the air-extraction system is conveyed directly outwards without the use of flues in so far as it is cleaned and de-odourized air.

More specifically, the air-extraction system carries out treatment of all the air that is extracted from the two electric ovens, as well as from the fume hood with mesh filters, which in turn constantly takes in air from the gas cooking range and from the fryer, following a triple passage:
1. Active-carbon filtering with adsorption of the odours: unit for filtering and de-odourizing air, which comprises a dual-intake centrifugal fan; EU3-type 85% gravimetric air pre-filter, EU9-type 95% gravimetric bag filter, complete with active-vegetable-carbon cylinders in rods of the 207/C type, high-intensity electrostatic filter with protection thermostat (replacement of the filters once every six months).
2. Absolute filtering: located within the steel filtering chamber is the polyester bag filter, which protects the intake unit, ensures a high dust-withholding capacity, and guarantees the purity of the outgoing air, thanks to an extensive surface and to a high filtering efficiency (3 µm). A system for manual cleaning, made up of a vertically moving filter shaker, enables the operator to clean the filter without any trouble and at any moment, thus prolonging the service life of the filter itself, preventing saturation thereof, and consequent reduction of the suction performance. The suction system with F80 mouth located underneath the filter enables air to be drawn in without any need for replacing or removing the filter.
3. Water abatement for further treatment of possible particles of residual grease: the wet smoke-abatement apparatus provided, referred to as "scrubber", is of the high/medium-pressure water-jet type and is able to carry out abatement of particles of soot, oil, and grease present in the fumes/vapours from the cooking equipment. This apparatus is constituted by a fluid-tight steel plenum, present in which are one or more ramps for distribution of the water jet in counter-current with respect to the flow of the air that traverses it. For sampling the water a sump made of plastic material has been provided, set upstream of the connection to the sewage system and downstream of the abatement of the flow of air from the cooking equipment. The waste water produced by the abatement cycle referred to above is to be considered as domestic waste water in so far as it is free from any pollutant.

As regards treatment of the air carried out according to the present invention, it should be noted that water abatement for further treatment of possible particles of residual grease is not a mere constructional choice of the designer, but serves not only for purifying the air and the vapours/fumes treated but also for reducing considerably their temperature down to ambient temperature prior to their emission into the external environment. The wet fume-abatement apparatus provided is referred to as "scrubber" and is of the high/medium-pressure water-jet type, capable of carrying out abatement of particles of soot, oil, and grease that are present in the vapours/fumes from cooking equipment. This apparatus is constituted by a fluid-tight steel plenum, present within which are one or more ramps for distribution of the water-jet in counter-current with respect to the flow of the air that traverses it. The air that is introduced, immediately downstream of the abatement apparatus, into the external environment is at ambient temperature (the heat of the vapours and/or fumes is controlled precisely by the jet of water that impinges on them) and without any smells. To slow down the flow rate of the water a "trap" has been provided that divides the flow into a number of sections. For sampling the water a sump made of plastic material has been provided, set upstream of the connection to the sewage system and downstream of the abatement of the flow of air from the cooking equipment. The waste water produced by the abatement cycle referred to above is to be considered as domestic waste water in so far as it is free from contaminants.

The air-extraction system comprises three distinct lines (what appears in brackets refers to the type of line represented in the layout):
- electric-oven line obtained with AISI 304 F 250 steel piping (double solid line);
- cooking-range and fryer hood line made of AISI 304 F 200 steel (20%-full mesh); and
- ambient-air-extraction line made of AISI 304 F 250 steel (45° mesh).

### TECHNICAL SPECIFICATIONS

The following specifications are moreover to be respected:
- the maximum difference between the internal and external temperature in the summer period is not higher than 7°C;
- the maximum temperature, in the winter season, is in conformance with what is set down in Art. 4 of the DPR (Decree of the President of the Republic) 412/93;
- the use of humidification systems that allow stagnation of water is not permitted;
- the external-air intakes are located at a suitable distance from chimneys or other sources of emissions (expulsion mouth of the air-conditioning system) in order to guarantee non-interference by these emissions;
- the system does not cause any disturbance, as regards emissions into the atmosphere, to dwellings set in the vicinity and responds to the limits of noise specified by the DPCM (Decree of the President of the Council of Ministers) of March, 1991 and further modifications;
- as regards the premises served by the system, the noise meets the requirements of the norm UNI 8199/81.

### LEGEND

ATU - Air-Treatment Unit (draws in air from the external environment)
A - Water abatement apparatus
E - Air extractor
C - Hood
1 - Pipe for extracting air from the premises
2 - Oven extraction pipe
3 - Hood extraction pipe
4 - Pipe for delivery of air into the premises
5 - Pipe for outlet of odourless air into the external environment (without flue)
6 - Pipe for charging water into the abatement apparatus
7 - Pipe for discharging water from the abatement apparatus

Finally, it is deemed expedient to point out that the present invention, thanks to the technical characteristics specified in Claim 1, respects the limits in the EHA4 category, as specified by the norm UNI 13779.

As confirmation of the foregoing, quoted below is a passage of the ordinance of the Municipality of Bari (Italy) in this connection:
*"Since the Legislative Decree No. 152*/*06 does not admit of any exception to the obligation of introduction of the products of combustion into the flue, whereas as regards cooking fumes the norms UNI-CIG 7129*/*3, point 4.1, and UNI-EN 13779*/*2008*, *point A.2.3 allow, in the case where exhaust of fumes at roof level is not possible, direct through-wall exhaust according to what is set down in UNI 7129*/*2, in order to obtain the concession the system of discharge of exhausted air must fall within the category EHA2** at a distance of at least 8 m from the nearest building and at least 2 m from an opening in the same wall, the discharge volume must not exceed 0.5 m³*/*s, and the rate must be at least 5 m*/*s. Since the air extracted by suction hoods serving professional kitchens falls within the category EHA4***, suitable systems for filtration and abatement of cooking fumes and smells must be envisaged, with specific certification of the suitability of the system that makes express reference to the EHA category assigned, and appropriate maintenance, on the part of the owner of the activity or else of the company responsible for maintenance, in perfect operating conditions via the necessary interventions of periodic maintenance for which there shall be stipulated and exhibited a specific maintenance contract stipulated with a specialized entity, from which it shall be possible to deduce the type of interventions carried out,* as *well as their periodicity. As regards the use of fuels for cooking systems, the products of their combustion shall in any case be introduced into the flue, and consequently it is suggested that electric systems be used. It, however, remains understood that Art. 674 of the Penal Code and Art . 844 of the Civil Code shall apply in the case where the surrounding neighbourhood were to suffer any harm or detriment notwithstanding the use of systems for filtration and abatement of cooking fumes and smells, even though such systems are certified. Notes:*
** EHA = Exhausted Air*
*** EHA2 - Air containing impurities deriving from human activities, such as dining rooms, kitchens for preparation of hot drinks, shops, storage spaces in buildings used for offices, hotel rooms, or dressing rooms, where smoking is allowed*
**** EHA4 = Air containing impurities and smells in concentrations significantly higher than what is allowed for the air inside areas occupied by people"*

## Claims

1. A forced-airing system with air extraction/reintegration for serving working premises, **characterized in that** it comprises, in combination:
- means for extracting air from the premises to be aired;
- means for treating the air extracted from the premises;
- means for direct emission into the atmosphere of all or part of the air treated without the use of flues;
- means for introducing external air; and
- means for treating the air coming from outside prior to introduction thereof into the premises to be aired;
wherein said means for extracting air and treating it prior to sending it into the atmosphere comprise:
- an air extractor complete with odour-abatement apparatus provided with active-carbon filters and absolute bag filter, which, in addition to filtering the air, de-odourizes it; and
- a water abatement apparatus for further treatment and subsequent discharge into the sewer.

2. The airing system according to Claim 1, **characterized in that** it comprises an air-treatment unit (ATU) for drawing all the air directly from outside, filtering it, and introducing it into the premises via a purposely provided ducting equipped with corresponding mouths, where said air introduced is practically at neutral temperature, i.e., 20°C in winter season and 26°C in summer.

3. The airing system according to Claim 2, **characterized in that** it envisages terminal units for introduction and diffusion of the air into the premises, purposely calculated to obtain low final rates of the air in order to prevent draughts that might be troublesome for the operators present in the premises.

4. The airing system according to Claim 1, **characterized in that** said means for direct emission into the atmosphere are designed to convey the air treated directly towards the outside without the use of flues in so far as it is cleaned and de-odourized air.

5. The airing system according to Claim 1, **characterized in that** the extraction means carry out treatment of all the air that is extracted from one or more electric ovens, as well as from at least one hood with mesh filters, which in turn constantly extracts air from at least one gas hob and from at least one fryer, comprise means for:
a). active-carbon filtering with adsorption of odours, via an assembly for filtering and de-odourizing air comprising a dual-intake centrifugal fan;
b). absolute filtering: located within the steel filtering chamber is the polyester bag filter, which protects the intake unit, ensures a high dust-withholding capacity, and guarantees purity of the outgoing air, thanks to an extensive surface and to a high filtering efficiency;
c). water abatement for further treatment of possible particles of residual grease: a wet smoke-abatement apparatus, or wet scrubber, of the high-to-medium-pressure water-jet type is provided, which is able to abate the particles of soot, oil, and grease present in the fumes/vapours from the cooking equipment;
wherein the waste water produced by the abatement system referred to above may be considered as domestic waste water in so far as it is free from any pollutant.

6. The airing system according to the preceding claim, **characterized in that** the filtering system further comprises: EU3-type 85% gravimetric air prefilter, EU9-type 95% gravimetric bag filter, complete with active-vegetable-carbon rods of the 207/C type, and high-intensity electrostatic filter with protection thermostat.

7. The airing system according to Claim 5 or Claim 6, **characterized in that** it envisages a system of manual cleaning, made up of a vertically moving filter shaker, which enables the operator to clean the filter without any trouble and at any moment, prolonging the service life of the filter itself, preventing saturation thereof and consequent reduction of the suction performance; the suction system with F80 mouth positioned underneath the filter enabling suction without any need to replace or remove the filter.

8. The airing system according to Claim 5, **characterized in that** said water abatement apparatus is constituted by a fluid-tight steel plenum, present within which are one or more ramps for distribution of the water jet in counter-current with respect to the flow of the air that traverses it.

9. The airing system according to the preceding claim, **characterized in that** for sampling the water a sump made of plastic material is provided set upstream of the connection of the sewage system and downstream of the system for abatement of the flow of air from cooking processes.

10. The airing system according to Claim 2, **characterized in that** the aforesaid air-treatment unit (ATU), in addition to the air-filtering means, also comprises means for humidifying and/or heating/cooling said air prior to introduction thereof into the premises.
